# EUROPÄISCHE PATENTSCHRIFT

(11) **EP 1 777 093 B1**
(45) Veröffentlichungstag und Bekanntmachung des Hinweises auf die Patenterteilung: **11.02.2009**
(21) Anmeldenummer: 05024283.3
(22) Anmeldetag: 08.11.2005
(51) Int. Cl.: B60K 11/08, F28D 1/04, F28F 9/00, F01P 7/10

(54) **Kühlmodul und Verfahren zum Betrieb eines Kühlmoduls**
Cooling system and method for operating a cooling system
Molule de refroidissement et procede pour opérer un molule de refroidissement

(30) Priorität: 24.10.2005 DE 102005051158
(43) Veröffentlichungstag der Anmeldung: 25.04.2007
(73) Patentinhaber: Delphi Technologies Inc., Troy, Michigan 48007 (US)
(72) Erfinder: Lieser, Michael E., 54668 Alsdorf (DE); Neufang, Hans-Georg E., 54343 Föhren (DE)
(74) Vertreter: Robert, Vincent

(56) Entgegenhaltungen:
- EP-A- 0 734 892
- GB-A- 302 322
- US-A- 3 203 499
- US-A- 5 901 786
- US-B1- 6 318 450
- PATENT ABSTRACTS OF JAPAN Bd. 010, Nr. 360 (M-541), 3. Dezember 1986 (1986-12-03) -& JP 61 155614 A (NIPPON DENSO CO LTD), 15. Juli 1986 (1986-07-15)
- PATENT ABSTRACTS OF JAPAN Bd. 2003, Nr. 10, 8. Oktober 2003 (2003-10-08) -& JP 2003 170733 A (HONDA MOTOR CO LTD), 17. Juni 2003 (2003-06-17)
- PATENT ABSTRACTS OF JAPAN Bd. 1998, Nr. 13, 30. November 1998 (1998-11-30) & JP 10 227213 A (NISSAN MOTOR CO LTD), 25. August 1998 (1998-08-25)
- PATENT ABSTRACTS OF JAPAN Bd. 2003, Nr. 12, 5. Dezember 2003 (2003-12-05) & JP 2004 299446 A (CALSONIC KANSEI CORP), 28. Oktober 2004 (2004-10-28)
- PATENT ABSTRACTS OF JAPAN Bd. 017, Nr. 282 (M-1420), 31. Mai 1993 (1993-05-31) & JP 05 010125 A (NIPPONDENSO CO LTD), 19. Januar 1993 (1993-01-19)

## Beschreibung

Die Erfindung betrifft ein Kühlmodul insbesondere zum Einsatz in Kraftfahrzeugen sowie ein Verfahren zum Betrieb eines solchen Kühlmoduls. Ein solches Kühlmodul umfasst in an sich bekannter Art im Wesentlichen senkrecht zu einem das Kühlmodul im Betrieb durchströmenden Luftstrom ausgerichtete und in dieser Ausrichtung schichtartig angeordnete Einzelkomponenten. Bei diesen Komponenten handelt es sich zumindest um einen Kondensator, der bei Einsatz in einem Kraftfahrzeug für die Klimatisierung, insbesondere Kühlung, des Fahrzeugs eine Rolle spielt. Darüber hinaus ist ein Gebläse vorgesehen, das für eine ausreichende Luftmenge zur Durchströmung des Kühlmoduls sorgt. Dies ist, wiederum beim Einsatz in Kraftfahrzeugen, besonders bei stehenden oder nicht ausreichend schnell bewegten Kraftfahrzeugen von Belang, wenn nämlich das sich rein aufgrund des sogenannten Fahrtwindes ergebende Luftvolumen nicht ausreichend ist. Schließlich umfasst das Kühlmodul noch einen Kühler, der bei der Kühlung des Antriebsaggregates des Kraftfahrzeugs, also z.B. des jeweiligen Verbrennungsmotors, eine Rolle spielt.

Derartige Kühlmodule sind allgemein bekannt. Bekannt ist auch, z.B. aus der US 6,155,335 das Gebläse oder gegebenenfalls auch mehrere Gebläse zwischen Kondensator und Kühler anzuordnen.

Noch nicht ganz optimal bei dem aus der US 6,155,335 bekannten Kühlmodul ist allerdings, dass eine Anpassung der Wirksamkeit oder der Nutzung einzelner Komponenten des Kühlmoduls an unterschiedliche Betriebssituationen des Kraftfahrzeugs nicht oder kaum möglich ist.

Aus der US 5,901,786 ist ein Kraftfahrzeugmotor-Kühlmodul mit einem Kondensator, einem Ventilator sowie einem Kühler, welche linear hintereinander in einem Gehäuse angeordnet sind, bekannt. In einer seitlichen Wandung des Gehäuses befindet sich jeweils ein mittels Klappen verschließbarer Luft-Bypässe für den Kondensator und für den Kühler, wobei das Gehäuse mit der Gehäusewandung mit den zwei verschließbaren Luft-Bypässen, eine große Bauweise des Kühlmoduls mit sich bringt. Somit ist für das Kühlmodul ein hoher Bedarf an Einbauraum im Kraftfahrzeug, welcher jedoch aufgrund der Gegebenheiten in einem Motorraum nur begrenzt zur Verfügung steht, gegeben. Zudem bedingen die zusätzlichen Komponenten (Gehäuse mit Gehäusewandung mit zwei verschließbaren Luft-Bypässen) sowie deren Einbau in das Kühlmodul hohe Kosten bei Herstellung, Einbau, Wartung und Reparatur.

Die JP 61155614 beschreibt eine Kühlvorrichtung für einen Kraftfahrzeugmotor, bei welcher Kühlwasser Motorwärme aufnimmt und diese Wärme mittels eines Wärmetauschers auf ein Kühlmittel übertragen wird. Das Kühlmittel fließt dabei nach einer Passage des Wärmetauschers durch einen "expander", welcher über einen Ventilatorantrieb mit einem Ventilator gekoppelt ist, und einen Kondensator ("condenser") zur Abkühlung des Kühlmittels, bevor das Kühlmittel wieder in den Wärmetauscher gelangt. Mittels im "expander" durch adiabatische Expansion des heißen Kühlmittels gewonnener Energie wird der Ventilator angetrieben, so dass dieser einen Luftstrom auf den Kondensator erzeugt, mittels welchem das Kühlmittel im Kondensator gekühlt wird.

Der Erfindung liegt daher die Aufgabe zugrunde, ein Kühlmodul der o.g. Art anzugeben, bei dem die vorstehend genannten Nachteile nicht auftreten oder zumindest verringert sind.

Diese Aufgabe wird erfindungsgemäss mit einem Kühlmodule mit den Merkmalen des Anspruchs 1 gelöst. Dazu ist bei einem Kühlmodul mit im Wesentlichen senkrecht zu einem das Kühlmodul in Betrieb durchströmenden Luftstrom ausgerichteten und in dieser Ausrichtung schichtartig angeordneten Komponenten, darunter zumindest ein Kondensator, wenigstens ein Gebläse sowie ein Kühler, wobei des Gebläse zwischen Kondensator und Kühler angeordnet ist, vorgesehen, dass zumindest ein Teil der Fläche des Gebläses durch den Kühler nicht abgedeckt ist.

Dadurch, dass ein Teil der Fläche des Gebläses durch den Kühler nicht abgedeckt ist, ergibt sich für den das Kühlmodul passierenden Luftstrom stromabwärts des Gebläses eine Art ,,Bypass", weil nämlich nur noch ein Teil des Luftstroms durch den Kühler geleitet wird, während in dem Bereich, in dem die Fläche des Gebläses durch den Kühler nicht abgedeckt ist, die verbleibende Luftmenge das Kuhlmodul ohne weiteren Widerstand passieren kann. Im Endeffekt resultiert daraus eine größere Luftmenge zur Durchströmung des stromaufwärts des Gebläses angeordneten Kondensators im Vergleich zur einer den stromabwärts des Gebläses angeordneten Kühler durchströmenden Luftmenge. Dieses ungleiche Verhältnis von Luftmengen ist vor allem bei Betriebssituationen des Kraftfahrzeugs von Bedeutung, bei denen für die Klimatisierung des Innenraums des Kraftfahrzeugs eine möglichst hohe Kühlleistung erforderlich ist, während auf der anderen Seite der Bedarf an Kühlleistung für das Antriebsaggregat eher gering ist. Solche Betriebssituationen ergeben sich insbesondere wenn das Kraftfahrzeug steht, z.B. auf einem sonnenbeschienenen Parkplatz oder wenn das Kraftfahrzeug mit geringen Geschwindigkeiten bewegt wird.

Bevorzugt ist für den nicht abgedeckten Teil der Fläche des Gebläses ein verstellbares Verschlussmittel oder verstellbare Verschlussmittel vorgesehen. Mit dem oder jedem verstellbaren Verschlussmittel ergibt sich eine nochmals verbesserte Anpassbarkeit des Kühlmoduls an unterschiedliche Betriebssituationen des Kraftfahrzeugs. Wenn nämlich das oder jedes verstellbare Verschlussmittel in eine Offenstellung bewegt wird, ergibt sich der oben bereits beschrieben Bypass für ein das Kühlmodul durchströmendes Luftvolumen stromabwärts des Gebläses, d.h. nur ein Teil des stromaufwärts des Gebläses angesaugten Luftvolumens passiert den Kühler, während ein Restanteil das Kühlmodul ohne den Strömungswiderstand des Kühlers verlassen kann. Mit dem oder jedem Verschlussmittel ist der Bypass selbst und das Luftvolumen durch den Bypass einstellbar. Bei geschlossenem Verschlussmittel oder geschlossenen Verschlussmitteln ist der Bypass blockiert, so dass das gesamte oder zumindest im Wesentlichen das gesamte stromaufwärts des Gebläses angesaugte Luftvolumen das Kühlmodul auch durch den Kühler wieder verlässt. Eine solche Stellung des oder jedes Verschlussmittels ist vorteilhaft, wenn maximale Kühlleistung für das Antriebsaggregat des Kraftfahrzeugs gefordert wird. Darüber hinaus eröffnet die Verstellbarkeit des oder jedes Verschlussmittels, also die Einstellung des oder jedes Verschlussmittels in Stellungen zwischen der offenen Position und einer geschlossenen Position, die Möglichkeit der Anpassung der Kühlleistung des Kühlmoduls an "Zwischensituationen", wenn also eine Hohe Kühlleistung für die Klimatisierung des Innenraums des Fahrzeugs gefordert ist und gleichzeitig eine hohe Kühlleistung zur Kühlung des Antriebsaggregat zur Verfügung stehen muss. In einer solchen Betriebssituation wird das oder jedes Verschlussmittel näherungsweise in einer Mittelstellung orientiert, so dass der Bypass nur noch teilweise, insbesondere nur noch circa zur Hälfte, geöffnet ist.

Besonders bevorzugt ist das oder jedes Verschlussmittel in Abhängigkeit von der jeweiligen Betriebssituation des Fahrzeugs, in das das Kühlmodul eingebaut ist, ansteuerbar. Auf diese Art und Weise kann die Anpassung des Kühlmoduls an unterschiedliche Betriebszustände unmittelbar in Ansehung von Messwerten oder sonstigen Parametern, die bestimmte Betriebszustände repräsentieren oder aus denen die Präsenz bestimmter Betriebszustände ableitbar ist, erfolgen. So kann einerseits die Temperatur der jeweiligen Kühlmedien, die den Kondensator, den Kühler sowie gegebenenfalls einen bisher nicht erwähnten Ladeluftkühler durchströmen, erfasst werden und in Ansehung dieser Temperaturmesswerte die Verstellung des oder jedes Verschlussmittels erfolgen. Andererseits ist auch eine Verwendung weiterer Parameter, wie z.B. Motordrehzahl, Geschwindigkeit des Kraftfahrzeugs und Innentemperatur, als Eingangswerte für eine Steuerung der Position der Verschlussmittel denkbar. Schließlich ist die Steuerung der Position des oder jedes Verschlussmittels auch zu einer Regelung erweiterbar, wenn nämlich eine geeignete Rückführung der Regelparameter erfolgt.

Bevorzugt sind als Verschlussmittel schwenkbare Klappen, insbesondere einer Mehrzahl schwenkbarer Klappen, vorgesehen. Die Verwendung von schwenkbaren Klappen als Verschlussmittel hat den Vorteil, dass die wirksame Größe des Bypasses einerseits durch die Position der einzelnen Klappen beeinflussbar ist, und das andererseits eine Feinjustierung der wirksamen Größe des Bypasses auch dadurch möglich ist, das einzelne Klappen komplett oder näherungsweise geschlossen bleiben, während andere Klappen komplett oder näherungsweise geöffnet werden. Zudem ergibt sich bei einer Mehrzahl von Klappen eine geringere Bautiefe der entsprechenden Komponente in dem Kühlmodul, weil nämlich eine einzelne z.B. parallel zum dem das Kühlmodul durchströmenden Luftstrom gestellte Klappe eine höhere Bautiefe erfordert als eine Mehrzahl in gleicher Ebene nebeneinander angeordneter Klappen.

Weiter bevorzugt weist die oder jede schwenkbare Klappe die Form eines in Richtung auf eine Nabe des Gebläses auf Höhe der Überdeckung des Gebläses durch den Kühler abgeschnitten Kreissektors auf. Auf diese Weise können die einzelnen schwenkbaren Klappen in eine Stützkonstruktion, die zur Anbringung des Gebläses ohnehin erforderlich ist, eingepasst werden. Eine solche Stützkonstruktion ist üblicherweise stern- oder strahlenförmig ausgeführt, wobei sich die einzelnen Strahlen im Bereich der Nabe des Gebläses treffen und wobei das Gebläse im Bereich dieser Nabe an der Stützkonstruktion festgelegt ist. Häufig fungieren die einzelnen Elemente der Stützkonstruktion dabei als Luftleitbleche und somit zur Orientierung des Luftstroms. Mit der oben beschriebenen Form der schwenkbaren Klappen passen sich diese genau in die Zwischenräume der Stützkonstruktion ein.

Weiter bevorzugt ist die Schwenkachse jeder Klappe senkrecht oder zumindest im Wesentlichen senkrecht zu einer Längsachse des Kühlmoduls, also einer gedachten Achse in Richtung der großen Ausdehnung des Kühlmoduls, orientiert. Auf diese Art und Weise kann die Schwenkachse weitestgehend in die Stützkonstruktion zur Halterung des Gebläses eingepasst werden, während eine grundsätzlich jedenfalls mögliche radiale Ausrichtung der Schwenkachse stets eine Fortsetzung der Schwenkachse bis in den Bereich der Nabe des Gebläses erfordern und in diesem Bereich eine unerwünschte und vermeidbare Abdeckung des Kühlers bewirken würde.

Gemäß einer bevorzugten Ausführungsform ist in Richtung des Luftstroms durch das Kühlmodul vor dem Gebläse ein Ladeluftkühler als zusätzliche schichtartig angeordnete Komponente vorgesehen. Durch Anordnung des Ladeluftkühlers stromaufwärts des Gebläses ist eine Integration der Ladeluftkühlung in das optimierte Kühlverfahren gemäß der Erfindung möglich, d.h. es kann z.B. bei geöffnetem Bypass eine maximale Kühlung der Ladeluft erfolgen, auch wenn in der jeweiligen Betriebssituation keine maximale Kühlung des Antriebsaggregats selbst erforderlich ist.

Weiter bevorzugt ist der Ladeluftkühler vor dem Kondensator angeordnet, so dass für die Ladeluftkühlung relativ der größte Kühleffekt ausgenutzt werden kann.

Bevorzugt deckt der Kondensator, bei vorhandenem Ladeluftkühler der Kondensator und der Ladeluftkühler, die Fläche des Gebläses vollständig ab. Auf diese Weise ist gewährleistet, dass das vom Gebläse angesaugte Luftvolumen vollständig oder zumindest im Wesentlichen vollständig den Kondensator beziehungsweise den Kondensator und den Ladeluftkühler durchströmt.

Des Weiteren kann zwischen dem Gebläse und dem Kühler ein Abzweig oder dergleichen vorgesehen sein, mit dem es möglich ist, einen Teil des Luftstroms durch das Kühlmodul abzuleiten und Kühlmodulexternen Einheiten oder Aggregaten, z.B. elektrischen oder elektronischen Einheiten, insbesondere solchen mit hoher Wärmeentwicklung, zur Kühlung zuzuführen.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

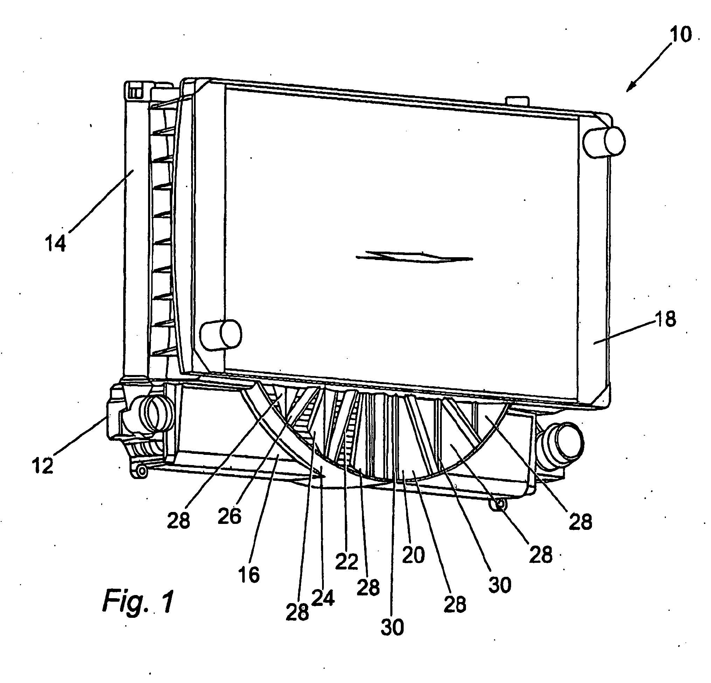

Darin zeigt
- Fig. 1: ein Kühlmodul gemäß der Erfindung.

Fig. 1 zeigt ein erfindungsgemäßes Kühlmodul 10, das in Richtung des Blockpfeils im Betrieb von einem Luftstrom durchströmt wird. Im Wesentlichen senkrecht zu diesem Luftstrom ausgerichtet sind ein Ladeluftkühler **12,** ein Kondensator **14,** ein Gebläse **16** sowie ein Kühler **18.** Die vorstehend genannten Komponenten 12-18 sind in ihrer Ausrichtung senkrecht zum Luftstrom schichtartig angeordnet. Der Ladeluftkühler 12 liegt dabei in Richtung des Luftstroms vor dem Kondensator 14. Der Kondensator 14 liegt vor dem Gebläse 16 und das Gebläse 16 liegt vor dem Kühler 18. Damit liegt entsprechend das Gebläse 16 zwischen Kondensator 14 und Kühler 18.

Wie in der Darstellung in Fig. 1 ersichtlich ist ein Teil der Fläche des Gebläses 16 durch den Kühler 18 nicht abgedeckt. Der Kühler 18 lässt also einen Teil der Fläche des Gebläses 16 frei. Im Bereich der freibleibenden Fläche des Gebläses 16 entsteht also gleichsam ein Bypass für das das Kühlmodul durchströmende Luftvolumen und zwar stromabwärts des Gebläses 16. Das Luftvolumen, das im Bereich des durch den Kühler 18 abgedeckten Abschnitts des Gebläses 16 durch das Gebläse 16 gefördert wird, wird im Wesentlichen auch den Kühler 18 passieren. Das Luftvolumen, das im Bereich der durch den Kühler 18 nicht abgedeckten Fläche des Gebläses 16 durch das Gebläse 16 transportiert wird kann das Kühlmodul 10 ohne den Luftwiderstand des Kühlers 18 überwinden zu müssen, verlassen. Auf diese Weise ergibt sich die Möglichkeit, dass ein vergleichsweise höheres Luftvolumen durch den Ladeluftkühler 12 und den Kondensator 14 gezogen werden kann, weil der bei bisherigen Lösungen, bei denen also der Kühler- 18 das Gebläse 16 vollständig abdeckt, sich stromabwärts des Gebläses aufgrund des Luftwiderstands des Kühlers 18 aufbauende Staudruck zumindest teilweise, nämlich im Bereich des Bypasses, nicht überwunden werden muss. Eine höhere Kühleffizienz für dem Ladeluftkühler 12 und dem Kondensator 14 ist damit die Folge.

Als Bypass wird dabei im Folgenden die sich in Fig. 1 als Kreissegment **20** ergebende Fläche des Gebläses 16, die durch den Kühler 18 nicht abgedeckt ist, bezeichnet. Zu dem Gebläse 16 gehört eine in Fig. 1 nur im Bereich dieses Kreissegments 20 sichtbare Stützkonstruktion **22,** die einerseits einen kreisförmigen Rahmen **24** zur Aufnahme eines nicht dargestellten Rotors sowie vom Rahmen 24 strahlenförmig in Richtung auf einem Mittelpunkt des Rahmen 24 ausgehende Leitbleche **26** umfasst, wobei der Rotor in an sich bekannter und ebenfalls nicht dargestellter Weise im Zentrum dieses Rahmens 24, also im Bereich einer Nabe des Rotors festgelegt ist. Zwischen den einzelnen Leitblechen 26 erkennt man als Verschlussmittel fungierende verstellbare Klappen **28,** von denen zur Veranschaulichung einige in einer geöffneten Position und andere in einer geschlossenen Position dargestellt sind. Durch die Stellung der Klappen 28 wird die wirksame Größe des Bypasses variiert. Bei geschlossenen Klappen 28 verlässt das komplette oder zumindest im Wesentlichen das komplette durch das Gebläse 16 angesaugte Luftvolumen des Kühlmodul 10 auch wieder über den Kühler 18. Bei geöffneten Klappen 28 verlässt zumindest ein Teil des vom Gebläse 16 durch den Ladeluftkühler 12 und den Kondensator 14 angesaugten Luftvolumens das Kühlmodul 10 über den Bypass so dass entsprechend nur ein Teil der durch das Gebläse 16 angesaugten Luftmenge das Kühlmodul 10 durch den Kühler 18 verlässt.

In der Darstellung in Fig. 1 ist teilweise erkennbar, dass jede schwenkbare Klappe 28 grundsätzlich die Form eines Kreissektors aufweisen kann. Ein Kreissektor ist nämlich genau die geometrische Form die zwischen zwei benachbarten Leitblechen 26 verbleibt. Bevorzugt hat eine einzelne schwenkbare Klappe 28 jedoch die Form eines in Richtung auf eine Nabe des Gebläses 16 auf Höhe der Überdeckung des Gebläses 16 durch den Kühler 18 abgeschnittenen Kreissektors. Auf diese Weise ist gewährleistet, dass z.B. bei geschlossenen Klappen 28 keine Überdeckung der wirksamen Fläche des Kühlers 18 durch die Klappen 28 erfolgt. Darüber hinaus ist die zuletzt beschriebene Form der Klappen 28 auch bei geöffneten Klappen vorteilhaft, weil nämlich unerwünschte Luftverwirblungen im Bereich der wirksamen Fläche des Kühlers 18 vermieden werden. Damit einher geht auch, dass bevorzugt die einzelnen Schwenkachsen **30** der Klappen 28 senkrecht oder zumindest im Wesentlichen senkrecht zu einer Längsachse des Kühlmoduls 10 verlaufen. Auf diese Art und Weise ist eine Lagerung der Schwenkachse 30 einerseits am Rahmen 24 und andererseits am jeweiligen Leitblech 26 möglich, während bei einer grundsätzlich jedenfalls möglichen radialen Ausrichtung der Schwenkachse 30 jede Schwenkachse 30 vom Rahmen 24 bis zur Nabe des Gebläses 16 verlaufen würde und damit, soweit sie den wirksamen Bereich des Kühlers 18 überdeckt, dort zu unerwünschten Verwirbelungen des Luftvolumens führen würde. Abschließend ist darauf hinzuweisen, dass in der dargestellten Ausführungsformgemäß Fig. 1 Ladeluftkühler 12, Kondensator 14 und Kühler 18 in etwa die gleiche Breite aufweisen, wodurch sich insgesamt ein kompaktes, hinsichtlich seiner Hüllkontor im Wesentlichen quaderförmiges Kühlmodul 10 ergibt. Während der Kühler 18 die Fläche des Gebläses 16 nur teilweise abdeckt um den oben beschriebenen Bypass zu erhalten, decken sowohl Ladeluftkühler 12 als auch Kondensator 14 die Fläche des Gebläses 16 vollständig ab, so dass bei geöffnetem Bypass das aufgrund des stromabwärts des Gebläses 16 verringerten Staudrucks zusätzliche Luftvolumen den Ladeluftkühler 12 und den Kondensator 14 passiert. Wenn kein zusätzliches Luftvolumen erforderlich ist, weil die momentane Kühlleistung ausreicht, kann entsprechend die Drehzahl des Gebläses 16 verringert werden, was einerseits die Lebensdauer des Gebläses 16 und andererseits eine mit dem Betrieb des Gebläses 16 verbundene Geräuschentwicklung positiv beeinflusst.

Damit lässt sich die Erfindung kurz wie folgt darstellen: Es wird ein Kühlmodul 10 zur Verwendung in Kraftfahrzeugen mit zumindest einem Kondensator 14, einem Gebläses 16 und einem Kühler 18 angegeben, bei dem zumindest ein Teil der Fläche des Gebläses 16 durch den Kühler 18 nicht abgedeckt ist, so dass sich im Bereich der nicht abgedeckten Fläche des Gebläses 16 ein Bypass für einen das Kühlmodul 10 im Betrieb durchströmenden Luftstrom ergibt, derart dass ein Teil des das Kühlmodul 10 durchströmenden Luftstroms dieses über den Kühler 18 und ein verbleibender Teil des Luftstroms des Kühlmodul 10 über den Bypass verlässt. Zudem ist die wirksame Größe des Bypasses durch verstellbare Verschlussmittel, wie insbesondere verschwenkbare Klappen 28 beeinflussbar und zwar insbesondere im Hinblick auf unterschiedliche Betriebszustände des Kraftfahrzeugs.

### Bezugszeichenliste

- 10: Kühlmodul
- 12: Ladeluftkühler
- 14: Kondensator
- 16: Gebläse
- 18: Kühler
- 20: Kreissegment
- 22: Stützkonstruktion
- 24: Rahmen
- 26: Leitbleche
- 28: Klappe
- 30: Schwenkachse

## Patentansprüche

1. Kühlmodul (10) mit im Wesentlichen senkrecht zu einem das Kühlmodul im Betrieb durchströmenden Luftstrom ausgerichteten und in dieser Ausrichtung schichtartig angeordneten Komponenten,
darunter zumindest ein Kondensator (14),
wenigstens ein Gebläse (16) und
ein Kühler (18),
wobei das Gebläse (16) zwischen Kondensator (14) und Kühler (18) angeordnet ist,
**dadurch gekennzeichnet, dass**
zumindest ein Teil der Fläche des Gebläses (16) durch den Kühler (18) nicht abgedeckt ist
und wobei der nicht durch den Kühler (18) abgedeckten Teil der Fläche des Gebläses (16) als ein zumindest teilweise verschließbarer Bypass ausgebildet ist.

2. Kühlmodul nach Anspruch 1, wobei für den Bypass verstellbare Verschlussmittel (28) vorgesehen sind.

3. Kühlmodul nach Anspruch 1, wobei das oder jedes Verschlussmittel (28) in Abhängigkeit von unterschiedlichen Betriebszuständen eines Fahrzeugs, in das das Kühlmodul (10) einbaubar ist, ansteuerbar sind.

4. Kühlmodul nach Anspruch 3, wobei als Verschlussmittel schwenkbare Klappen (28) vorgesehen sind.

5. Kühlmodul nach Anspruch 4, die oder jede schwenkbare Klappe (28) die Form eines in Richtung auf eine Nabe des Gebläses (16) auf Höhe der Überdeckung des Gebläses (16) durch den Kühler (18) abgeschnittenen Kreissegmentes aufweist.

6. Kühlmodul nach Anspruch 5, wobei eine Schwenkachse (30) jeder Klappe (28) senkrecht oder zumindest im Wesentlichen senkrecht zur Längsachse des Kühlmoduls (10) verläuft.

7. Kühlmodul nach einem oder mehreren der vorangehenden Ansprüche, wobei in Richtung des Luftstroms durch das Kühlmodul (10) vor dem Gebläse (16) ein Ladeluftkühler (12) angeordnet ist.

8. Kühlmodul nach Anspruch 7, wobei der Ladeluftkühler (12) vor dem Kondensator (14) angeordnet ist.

9. Kühlmodul nach einem oder mehreren der vorangehenden Ansprüche, wobei der Kondensator (14) die Fläche des Gebläses (16) vollständig abdeckt.

10. Kühlmodul nach Anspruch 7 und Anspruch 9, wobei der Kondensator (14) und der Ladeluftkühler (12) die Fläche des Gebläses (16) vollständig abdecken.

11. Verfahren zum Betrieb eines Kühlmoduls nach einem der Ansprüche 2 bis 10, wobei das oder jedes Verschlussmittel (28) in Abhängigkeit von unterschiedlichen Betriebszuständen eines Fahrzeugs, in das das Kühlmodul eingebaut ist, angesteuert wird.

## Claims

1. Cooling module (10) having components oriented substantially perpendicularly to an air stream flowing through the cooling module during operation and arranged in a layer in this orientation,
including at least one condenser (14),
at least one fan (16) and
a cooler (18),
the fan (16) being arranged between condenser (14) and cooler (18),
**characterised in that**
at least a portion of the surface of the fan (16) is not covered by the cooler (18) and the portion of the surface of the fan (16) not covered by the cooler (18) is designed as an at least partially closable bypass.

2. Cooling module according to claim 1, adjustable closure means (28) being provided for the bypass.

3. Cooling module according to claim 1, the or each closure means (28) being controllable as a function of different operating states of a vehicle in which the cooling module (10) can be installed.

4. Cooling module according to claim 3, pivotable valves (28) being provided as the closure means.

5. Cooling module according to claim 4, the or each pivotable valve (28) having the form of a circle segment cut off at the level of covering of the fan (16) by the cooler (18) in a direction towards a hub of the fan (16).

6. Cooling module according to claim 5, a pivot shaft (30) of each valve (28) running perpendicularly or at least substantially perpendicularly to the longitudinal axis of the cooling module (10).

7. Cooling module according to one or more of the preceding claims, an intercooler (12) being arranged in front of the fan (16) in the direction of the air stream through the cooling module (10).

8. Cooling module according to claim 7, the intercooler (12) being arranged in front of the condenser (14).

9. Cooling module according to one or more of the preceding claims, the condenser (14) completely covering the surface of the fan (16).

10. Cooling module according to claim 7 and claim 9, the condenser (14) and the intercooler (12) completely covering the surface of the fan (16).

11. Method for operating a cooling module according to any of claims 2 to 10, the or each closure means (28) being controlled as a function of different operating states of a vehicle in which the cooling module is installed.

## Revendications

1. Module de refroidissement (10) comprenant des composants orientés perpendiculairement à un flux d'air qui traverse le module de refroidissement en service et agencés par couches dans cette orientation,
au-dessous au moins un condenseur (14),
au moins un ventilateur (16), et
un élément de refroidissement (18),
le ventilateur (16) étant agencé entre le condenseur (14) et l'élément de refroidissement (18),
**caractérisé en ce qu'**au moins une partie de la surface du ventilateur (16) n'est pas recouverte par l'élément de refroidissement (18), et
la partie de la surface du ventilateur (16), qui n'est pas recouverte par l'élément de refroidissement (18), est réalisée sous la forme d'un by-pass susceptible d'être au moins partiellement obturé.

2. Module de refroidissement selon la revendication 1, dans lequel des moyens d'obturation réglables (28) sont prévus pour le by-pass.

3. Module de refroidissement selon la revendication 1, dans lequel le ou les moyen(s) d'obturation (28) est/sont pilotables en fonction de différents états de fonctionnement d'un véhicule dans lequel le module de refroidissement (10) peut être intégré.

4. Module de refroidissement selon la revendication 3, dans lequel des clapets pivotants (28) sont prévus à titre de moyens d'obturation.

5. Module de refroidissement selon la revendication 4, dans lequel le ou chaque clapet pivotant (28) présente la forme d'un segment de cercle recoupé par l'élément de refroidissement en direction d'un moyeu du ventilateur (16) à la hauteur du recouvrement du ventilateur (16).

6. Module de refroidissement selon la revendication 5, dans lequel un axe de pivotement (30) de chaque clapet (28) s'étend perpendiculairement ou au moins sensiblement perpendiculairement à l'axe longitudinal du module de refroidissement (10).

7. Module de refroidissement selon l'une ou plusieurs des revendications précédentes, dans lequel un dispositif de refroidissement (12) pour l'air de chargement est agencé avant le ventilateur (16) en direction du flux d'air à travers le module de refroidissement (10).

8. Module de refroidissement selon la revendication 7, dans lequel le dispositif de refroidissement (12) pour l'air de chargement est agencé avant le condenseur (14).

9. Module de refroidissement selon l'une ou plusieurs des revendications précédentes, dans lequel le condenseur (14) recouvre complètement la surface du ventilateur (16).

10. Module de refroidissement selon la revendication 7 et la revendication 9, dans lequel le condenseur (14) et le dispositif de refroidissement (12) pour l'air de chargement recouvrent complètement la surface du ventilateur (16).

11. Procédé pour le fonctionnement d'un module de refroidissement selon l'une des revendications 2 à 10, dans lequel le ou chaque moyen d'obturation (28) est piloté en fonction de différents états de fonctionnement d'un véhicule dans lequel le module de refroidissement est intégré.
